# EUROPÄISCHE PATENTANMELDUNG

(11) **EP 1 122 092 A2**
(43) Veröffentlichungstag der Anmeldung: **08.08.2001**
(21) Anmeldenummer: 00122934.3
(22) Anmeldetag: 21.10.2000
(51) Int. Cl.: B60B 3/16, B60B 3/14

(54) **Metallfelge für Nutzfahrzeuge**

(30) Priorität: 03.02.2000 DE 20001907 U
(71) Anmelder: DEERE & COMPANY, Moline, Illinois 61265-8098 (US)
(72) Erfinder: Röckl, Michael, 68329 Mannheim (DE); Smith, Paul, 68623 Lampertheim (DE)
(74) Vertreter: Lau-Loskill, Philipp, Dipl.-Phys.

(57) **Zusammenfassung**

Es wird eine Metallfelge für Nutzfahrzeuge vorgeschlagen, die einen Felgenring (12) zur Aufnahme eines Reifens, eine daran befestigte Radschüssel (14), und eine Verstärkungsscheibe (26) enthält. Die Radschüssel (14) hat wenigstens einen Radschraubenlochkreis zur Befestigung an einem Achsflansch. Die Verstärkungsscheibe (26) ist konzentrisch mit der Radschüssel (14) oder Radscheibe verschraubbar und ihr Außendurchmesser ist größer als der des Achsflansches.

Um eine hohe Biegefestigkeit zu gewährleisten und Steifigkeitssprünge im Bereich der höchsten Biegebelastung der Radschüssel (14) zu vermieden wird vorgeschlagen, die Radschüssel (14) und/oder die Verstärkungsscheibe (26) im wesentlichen gewölbt auszubilden und so anzuordnen, so dass zwischen Radschüssel (14) und Verstärkungsscheibe (26) ein Hohlraum entsteht. In diesen Hohlraum sind Distanzmittel (22) angeordnet.

## Beschreibung

Die Erfindung betrifft eine Metallfelge für Nutzfahrzeuge mit einem Felgenring zur Aufnahme eines Reifens, mit einer daran befestigten Radschüssel oder Radscheibe, die wenigstens einen Radschraubenlochkreis zur Befestigung an einem Achsflansch aufweist, und mit einer Verstärkungsscheibe, die konzentrisch mit der Radschüssel oder Radscheibe verschraubbar ist und deren Außendurchmesser größer als der des Achsflansches ist. Die Erfindung ist sowohl bei Verwendung von gewölbten Radschüsseln als auch bei im wesentlichen ebenen Radscheiben anwendbar, auch wenn dies im folgenden Text nicht immer ausdrücklich hervorgehoben wird.

Metallfelgen werden insbesondere bei Nutzfahrzeugen verwendet. Beispielsweise haben die Hinterräder der John-Deere-Ackerschlepper der 6000-er Serie einen Felgenring, der auf seiner radialen Innenseite einen Felgenschraubenlochkreis zur Befestigung der Radschüssel mittels Bolzen und Muttern enthält. Die Radschüssel ist gewölbt ausgebildet und weist in ihrem radial inneren Bereich einen ebenen an den Achsflansch angepaßten Befestigungsflansch auf. Zur Befestigung der Metallfelge an dem Achsflansch werden Radbolzen verwendet, die sich durch Bohrungen erstrecken, welche auf einem innerhalb des Befestigungsflansches liegenden Radschraubenlochkreis angeordnet sind und in Gewindebohrungen des Achsflansches eindrehbar sind. Auf einem größeren, außerhalb des Befestigungsflansches liegenden Gewichtslochkreis enthält die Radschüssel Bohrungen, die der Befestigung von Ballastgewichten dienen.

Aus Fertigungs- und Kostengründen ist man bestrebt, die Radschüssel möglichst materialsparend auszubilden. Um dennoch hohe Kräfte übertragen zu können, ohne dass dies nachteilige Verformungen nach sich zieht, ist es bekannt, an Stelle einer ebenen Radscheibe eine Radschüssel zu verwenden, die gewölbt ausgebildet ist. Beispielsweise ist die Radschüssel zwischen ihrem inneren Befestigungsflansch und ihrem äußeren, mit dem Felgenring verbundenen Bereich gekröpft und weist zwei gegensinnig gebogene ringförmige Versetzungen auf. Aus der FR-A-2 756 220 ist es auch bekannt, die Radschüssel bereichsweise doppelwandig auszubilden, was jedoch einen relativ hohen Fertigungsaufwand erfordert. Es ist auch üblich, die Radschüssel zwischen einem Druckring und dem Achsflansch einzuspannen, wobei die Außendurchmesser von Druckring und Achsflansch in etwa gleich sind. Dies führt jedoch zu einem Steifigkeitssprung im Bereich des Achsflansches, wo besonders hohe Spannungskonzentrationen auftreten.

Eine Metallfelge der eingangsgenannten Art geht aus der DE-A-22 35 619 hervor, die Treib- und/oder Laufräder für Fahrzeuge beschreibt. Um den hohen Querbelastungen bei der Bodenbearbeitung Stand halten zu können, ist die Radscheibe mit der Radnabe über eine außerhalb deren Durchmesser biegesteif mit ihr verbundene an der Nabe direkt oder indirekt zentrierte biegesteife Scheibe verspannt. Die Scheibe weist zu mindest einen dem mittleren Radscheibendurchmesser entsprechenden Außendurchmesser auf. Radscheibe und Scheibe sind schüsselförmig ausgebildet, haben eine im wesentlichen gleiche Querschnittstruktur. Ihre einander zugewandten Oberflächen liegen flächig aufeinander.

Auch die durch die DE-A-22 35 619 bekannte Metallfelge ist nicht in der Lage allen in der Praxis auftretenden Belastungen problemlos standzuhalten. Werden beispielsweise bei Ackerschleppern Zwillingsräder verwendet, bei denen die Felge des äußeren Rades an der Felge des inneren Rades befestigt ist, müssen die gesamten Achslasten durch die Felge des inneren Rades aufgenommen werden. Die dabei auftretenden Biegekräfte können zu Rissbildungen in der Felge und zu deren Beschädigung und Zerstörung führen.

Die der Erfindung zugrunde liegende Aufgabe wird darin gesehen, eine Metallfelge der eingangs genannten Art anzugeben, durch welche die vorgenannten Probleme überwunden werden. Insbesondere soll die Metallfelge biegefest ausgebildet sein.

Im Bereich ihrer höchsten Biegebelastung sollen Steifigkeitssprünge vermieden oder zumindest vermindert werden. Die Metallfelge soll sich einfach und kostengünstig fertigen lassen.

Die Aufgabe wird durch die Lehre des Anspruchs 1 gelöst. Weitere vorteilhafte Ausgestaltungen und Weiterbildungen der Erfindung gehen aus den Unteransprüchen hervor.

Bei der erfindungsgemäßen Metallfelge ist eine Verstärkungsscheibe vorgesehen, die konzentrisch mit der Radschüssel oder Radscheibe verschraubbar ist und deren Außendurchmesser größer als der des Achsflansches ist. Die Radschüssel und/oder die Verstärkungsscheibe sind im wesentlichen gewölbt ausgebildet und werden so angeordnet, dass zwischen Radschüssel und Verstärkungsscheibe ein Hohlraum ausgebildet ist. In dem Hohlraum sind Distanzmittel eingefügt.

Durch die Ausbildung eines Hohlraums und das Einfügen der Distanzmittel wird der Abstand zwischen der Radschüssel und der Verstärkungsscheibe vergrößert. Es müssen somit längere Befestigungsschrauben verwendet werden, als sie sonst erforderlich wäre. Dies hat den entscheidenden Vorteil, dass sich die Befestigungsschrauben stärker dehnen lassen und dass eine höhere Vorspannung einstellbar ist als bisher. Die Gefahr der Verminderungen der Spannkräfte, die durch anfängliches Setzen der zusammengefügten Teile auftreten kann, wird somit weitgehend vermieden. Es können damit größere Kräfte abgestützt und in die Radschüssel eingeleitet werden. Die Gefahr der Rissbildung wird vermieden, zu mindest jedoch erheblich herabgesetzt. Die erfindungsgemäß ausgebildete Metallfelge gewährleistet eine maximale Belastbarkeit bei Verringerung der Spannungsbelastungen der Felgenteile.

Vorzugsweise dient als Distanzmittel ein Distanzring, der konzentrisch zu der Radschüssel und der Verstärkungsscheibe angeordnet ist. Der Distanzring hat vorzugsweise in etwa die gleichen radialen Abmessungen wie der Befestigungsflansch. Es kommen jedoch auch andere Abmessungen in Betracht. Auch muss es sich bei dem Distanzring nicht um eine kreisförmige Scheibe handeln, entscheidend ist lediglich, dass der Distanzring einen vorgebbaren Abstand zwischen der Radschüssel und der Verstärkungsscheibe aufrechtzuerhalten vermag.

Wird eine entsprechend der Radschüssel gewölbt geformte Verstärkungsscheibe um 180° verdreht auf die Radschüssel aufgesetzt, ergibt sich zwischen beiden ein Hohlraum, der im Flanschbereich teilweise durch einen Distanz- oder Zwischenring ausgefüllt wird. Damit liegen die Radschüssel, der Distanzring und die Verstärkungsscheibe eng aufeinander. Durch Verschraubung ergibt sich eine starre Verbindung zwischen diesen Elementen, so dass sich beim Anziehen der Befestigungsschrauben die Radschüssel und die Verstärkungsscheibe nicht federnd aufeinander zu bewegen.

Die gewölbte Ausbildung hat eine festigkeitsverstärkende Wirkung. Sie erhöht die Aussteifung und Biegesteifigkeit der Radscheibe bzw. der Verstärkungsscheibe. Der Distanzring füllt den Zwischenraum aus. Hierbei ergibt sich ein relativ großer Abstand zwischen der Radschüssel und der Verstärkungsscheibe, so dass relativ lange Dehnschrauben zur Befestigung des Rades an der Felge verwendet werden müssen. Dies ist vorteilhaft, da durch die große Dehnlänge der Radschrauben der Federweg der vorgespannten Schrauben länger ist als gewöhnlich und die Federkräfte bei Längenänderungen annähernd gleich groß bleiben.

Vorzugsweise wird zur Befestigung des Distanzringes ein Befestigungslochkreis genutzt, der für die Befestigung der Verstärkungsscheibe an der Radschüssel vorgesehen ist. Es handelt sich hierbei zweckmäßigerweise um den Radschraubenlochkreis.

Der Distanzring braucht keine gleichförmige Dicke aufzuweisen. Es kann aus Fertigungs- und Gewichtsgründen auch von Vorteil sein, wenn der Distanzring im Bereich der Befestigungslöcher Erhebungen aufweist. Eine solche Lösung bietet sich besonders dann an, wenn der Distanzring als Gussteil hergestellt wird, so dass aufwendige spanende Bearbeitungen vermieden werden. Die Erhebungen können beispielsweise konzentrisch zu den Löchern ausgebildet sein. Die Erhebungen können sich auf einer, aber auch auf beiden Seiten des Distanzringes befinden.

Eine vorteilhafte Alternative zu dem Distanzring sind Distanzrohre, z. B. Druckhülsen, durch die sich Befestigungsschrauben erstrecken.

Durch die in ihrem Durchmesser vergrößerte Ausbildung der Verstärkungsscheibe werden die Spannungskonzentrationen im Bereich des Achsflansches reduziert und mit einem weichen, elastischen Übergang in die äußeren Zonen der Radschüssel oder der Radscheibe eingeleitet. Diese Maßnahme läßt sich auf einfache Weise und kostengünstig realisieren.

Vorzugsweise ist die Verstärkungsscheibe in radialer Hinsicht wenigstens doppelt so breit wie die radiale Breite der Achsflanschfläche. Dabei können die inneren Durchmesser der Achsflanschfläche und der Verstärkungsscheibe in etwa gleich groß sein, so dass der Außendurchmesser der Verstärkungsscheibe erheblich größer ist als der des Achsflansches. Die Spannungskräfte konzentrieren sich hierbei nicht auf den hochbelasteten Achsflanschbereich, sondern werden in eine radial weiter außenliegende Zone verlagert.

Um Schrauben und Bohrungen einzusparen und eine Schwächung der Radschüssel durch zusätzliche Bohrungen zu vermeiden, ist es vorteilhaft, den Radschraubenlochkreis gleichzeitig für die Befestigung der Verstärkungsscheibe an der Radschüssel oder Radscheibe zu nutzen.

Eine besonders vorteilhafte Ausgestaltung der Erfindung sieht vor, dass die Befestigung der Verstärkungsscheibe an der Radschüssel oder Radscheibe durch Schrauben erfolgt, die auf wenigstens zwei Befestigungslochkreisen angeordnet sind. Die Lochkreise liegen vorzugsweise auf Teilkreisdurchmessern, die zueinander und zum Achsflansch konzentrisch sind. Beispielsweise ist die Verstärkungsscheibe mit der Radschüssel an dem Teilkreisdurchmesser der Radschrauben verbunden und wird an einem weiteren Befestigungslochkreis größeren Durchmessers mit der Radschüssel verschraubt.

Um die Krafteinleitung in einen radial weiter außenliegenden Bereich zu verlegen, ist es von Vorteil, wenn der Durchmesser eines, insbesondere des äußeren, Befestigungslochkreises größer ist als der Durchmesser des Radschraubenlochkreises.

Es kann auch zweckmäßig sein, bei einer Radschüssel oder Radscheibe, die einen Gewichtslochkreis für die Befestigung von Radgewichten aufweist, diesen Gewichtslochkreis gleichzeitig als Befestigungslochkreis für die Befestigung der Verstärkungsscheibe an der Radschüssel oder Radscheibe zu nutzen. Hierdurch können zusätzliche Bohrungen und Schrauben eingespart werden.

Es ist von Vorteil, wenn der Durchmesser eines äußeren Befestigungslochkreises zwischen 20% und 150% größer ist als der Durchmesser eines inneren Befestigungslochkreises. Radschraubenlochkreise haben bei Ackerschleppern beispielsweise Durchmesser von 275 mm (Standard), 203 mm und 335 mm, während der Durchmesser eines üblichen Gewichtslochkreises 430 mm beträgt. Jeweils eine der unterschiedlichen Radschraubenlochkreise können gemeinsam mit dem Gewichtslochkreis als innerer und äußerer Befestigungslochkreis zur Befestigung der Verstärkungsscheibe an der Radschüssel oder der Radscheibe genutzt werden.

Des weiteren kann es vorteilhaft sein, bei einer Radschüssel oder Radscheibe, die über einen Felgenschraubenlochkreis an dem Felgenring befestigt ist, den Felgenschraubenlochkreis gleichzeitig als Befestigungslochkreis für die Befestigung der Verstärkungsscheibe an der Radschüssel oder Radscheibe zu nutzen. Auch dies erspart zusätzliche Bohrungen und Schrauben.

Zur Einsparung von Werkzeugkosten bei der Herstellung der Verstärkungsscheibe, sieht eine bevorzugte Weiterbildung der Erfindung vor, dass die Verstärkungsscheibe eine Kontur aufweist, die dem radial inneren Bereich der Radschüssel oder Radscheibe im wesentlichen entspricht, so dass sie sich aus einer vorhandenen Radschüssel oder Radscheibe fertigen läßt. Zur Herstellung einer Verstärkungsscheibe wird eine durch ein Preßwerkzeug geformte Radschüssel oder Radscheibe verwendet. Aus der Radschüssel oder Radscheibe wird der mittlere Bereich als Verstärkungsscheibe herausgeschnitten. Die Radschüssel oder Radscheibe und die Verstärkungsscheibe können somit mit demselben Preßwerkzeug hergestellt werden.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

### Es zeigt:

- Fig. 1: die perspektivische Explosionszeichnung der Einzelteile einer erfindungsgemäßen Metallfelge und
- Fig. 2: die perspektivische Darstellung eines Distanzringes.

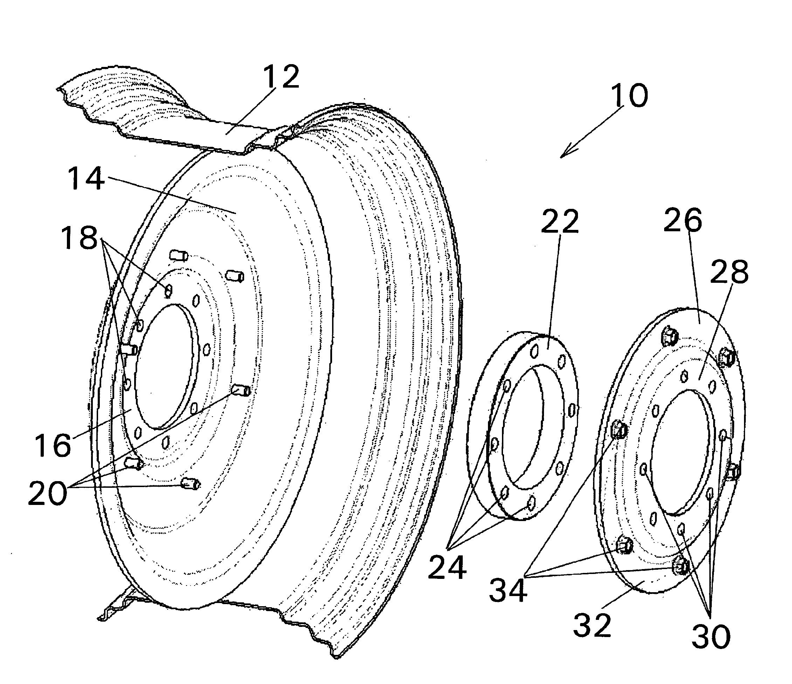

Die Metallfelge 10 enthält einen auf der linken Seite der Fig. 1 dargestellten konventionellen Felgenring 12, welcher der Aufnahme eines nicht dargestellten Reifens dient. Im radial innenliegenden Bereich des Felgenringes 12 ist eine übliche Radschüssel 14 befestigt. Die Art der Befestigung ist nicht näher dargestellt, es kann sich um eine Schweißverbindung handeln. Alternativ hierzu kann die Radschüssel 14 jedoch auch über einen nicht dargestellten Felgenschraubenlochkreis an dem Felgenring 12 festgeschraubt sein.

Radial innenliegend weist die Radschüssel 14 einen ebenen Befestigungsflansch 16 auf, der mit seiner nicht sichtbaren Rückseite der Anlage an einen nicht dargestellten Achsflansch dient. Im mittleren Umfangsbereich des Befestigungsflansches befinden sich Bohrungen 18, die auf einem konzentrischen Radschraubenlochkreis liegen. Diese Bohrungen 18 dienen der Befestigung der Metallfelge 10 an dem Achsflansch, welcher entsprechende Gewindebohrungen aufweist, in die Radbolzen eindrehbar sind.

Die Radschüssel 14 ist gewölbt ausgebildet, so dass der radial innere Bereich in axialer Hinsicht weiter zurückliegt (in Richtung des Achsflansches) als der radial äußere Bereich, der mit dem Felgenring 12 verbunden ist.

Radial außerhalb des Befestigungsflansches 16 sind die Gewindeenden von Schrauben 20 erkennbar, die von der Rückseite durch Bohrungen gesteckt sind, welche auf einem konzentrischen Gewichtslochkreis liegen. Die Schrauben des Gewichtslochkreises dienen der Befestigung von nicht dargestellten Ballastgewichten.

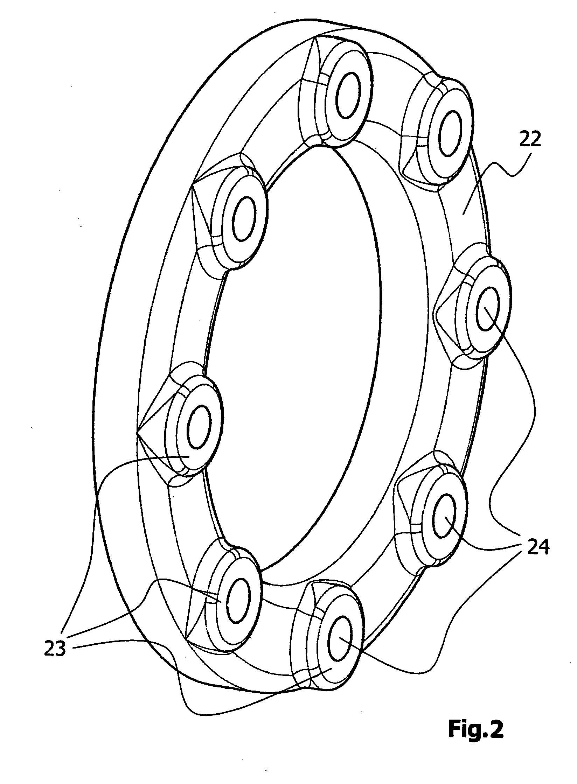

Im mittleren Bereich der Fig. 1 ist ein Distanzring 22 schematisch dargestellt, dessen Einzelheiten aus Fig. 2 hervorgehen. Der innere und der äußere Durchmesser des Distanzringes sind auf die Abmessungen des Befestigungsflansches 16 angepaßt und stimmen mit dessen Durchmessern in etwa überein. Durch den Distanzring 22 erstrecken sich Bohrungen 24, die auf einem Lochkreis liegen, der mit dem Radschraubenlochkreis korrespondiert. Der Distanzring 22 hat keine einheitliche Dicke. Vielmehr befinden auf der sichtbaren Seite des Distanzringes 22 in gleichmäßigem Abstand Erhebungen 23, durch welche sich die Bohrungen 24 erstrecken. Die Erhebungen 23 und die Bohrungen 24 sind im wesentlichen konzentrisch zueinander ausgerichtet.

Auf der rechten Seite der Fig. 1 ist eine Verstärkungsscheibe 26 dargestellt, die gewölbt ausgebildet ist und deren Form der des radial inneren Bereichs der Radschüssel 14 entspricht. Die Verstärkungsscheibe 26 ist zur Radschüssel 14 spiegelbildlich angeordnet. Sie hat ebenfalls in ihrem radial innenliegenden Bereich eine ebene Fläche 28, die dem Befestigungsflansch 16 der Radschüssel 14 entspricht und an der der Distanzring 22 anliegt. In dieser Fläche 28 befinden sich Bohrungen 30, die auf dem Radschraubenlochkreis liegen. In einem radial äußeren, ebenen Ringbereich 32 der Verstärkungsscheibe 26 sind auf einem Lochkreis, der dem Gewichtslochkreis der Radschüssel 14 entspricht, Flanschmuttern 34 angedeutet, hinter denen sich Bohrungen verbergen. Durch die Bohrungen lassen sich die Schrauben 20 stecken, auf die sich dann die Flanschmuttern 34 aufdrehen lassen.

Im montierten Zustand liegt der äußere Ringbereich 32 der Verstärkungsscheibe 26 an einem entsprechenden Ringbereich 36 der Radschüssel 14 an. Die Dicke des Distanzringes 22, insbesondere die Höhe der Erhebungen 23, ist so gewählt, das der Distanzring 22 im montierten Zustand zwischen der Fläche 28 der Verstärkungsscheibe 26 und dem Befestigungsflansch 16 der Radschüssel 14 eingespannt ist. Zur Befestigung der dargestellten Teile miteinander werden die Flanschmuttern 34 auf Schrauben 20 aufgedreht, die sich durch die auf dem Gewichtslochkreis liegenden Bohrungen 18 der Radschüssel 14 und der Verstärkungsscheibe 26 erstrecken. Die so vormontierte Metallfelge 10 wird durch nicht dargestellte Radschrauben an dem Achsflansch befestigt, indem die Radschrauben durch die auf dem Radschraubenlochkreis liegenden Bohrungen 30, 24 und 18 der Verstärkungsscheibe 26, des Distanzringes 22 und der Radschüssel 14 gesteckt und in die entsprechenden Gewindebohrungen des Achsflansches eingedreht werden.

Gewöhnlich erfolgt die Verschraubung der Metallfelge an dem nicht dargestellten Achsflansch derart, dass der Befestigungsflansch 16 der Radschüssel 14 an dem Achsflansch anliegt und die Verstärkungsscheibe 26 weiter außen angeordnet ist. Es ist jedoch auch eine umgekehrte Montage möglich, bei der die Fläche 28 der Verstärkungsscheibe 26 an dem Achsflansch anliegt.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. Beispielsweise können für die Befestigungslochkreise andere Durchmesser gewählt werden als der des Radschraubenlochkreises und des Gewichtslochkreises.

## Patentansprüche

1. Metallfelge für Nutzfahrzeuge mit einem Felgenring (12) zur Aufnahme eines Reifens, mit einer daran befestigten Radschüssel (14) oder Radscheibe, die wenigstens einen Radschraubenlochkreis zur Befestigung an einem Achsflansch aufweist, und mit einer Verstärkungsscheibe (26), die konzentrisch mit der Radschüssel (14) oder Radscheibe verschraubbar ist und deren Außendurchmesser größer als der des Achsflansches ist, dadurch gekennzeichnet, dass die Radschüssel (14) und/oder die Verstärkungsscheibe (26) im wesentlichen gewölbt ausgebildet und so angeordnet sind, so dass zwischen Radschüssel (14) und Verstärkungsscheibe (26) ein Hohlraum ausgebildet ist, und dass in dem Hohlraum Distanzmittel (22) angeordnet sind.

2. Metallfelge nach Anspruch 1, dadurch gekennzeichnet, dass die Distanzmittel wenigstens einen Distanzring (22) enthalten.

3. Metallfelge nach Anspruch 2, dadurch gekennzeichnet, dass zur Befestigung des Distanzringes (22) ein Befestigungslochkreis, welcher der Festlegung der Verstärkungsscheibe (26) an der Radschüssel (14) oder Radscheibe dient, genutzt wird.

4. Metallfelge nach Anspruch 2 oder 3, dadurch gekennzeichnet, dass der Distanzring (22) im Bereich der Löcher (24) eines Befestigungslochkreises Erhebungen aufweist, die vorzugsweise konzentrisch zu den Löchern (24) ausgebildet sind.

5. Metallfelge nach Anspruch 1, dadurch gekennzeichnet, dass als Distanzmittel Distanzrohre dienen, durch die sich Befestigungsschrauben erstrecken.

6. Metallfelge nach einem der Ansprüche 1 bis 5, dadurch gekennzeichnet, dass die Verstärkungsscheibe (26) in radialer Hinsicht wenigstens doppelt so breit wie die radiale Breite der Achsflanschfläche (36) ist.

7. Metallfelge nach einem der Ansprüche 1 bis 6, dadurch gekennzeichnet, dass der Radschraubenlochkreis gleichzeitig für die Festlegung der Verstärkungsscheibe (36) an der Radschüssel (14) oder Radscheibe genutzt wird.

8. Metallfelge nach einem der Ansprüche 1 bis 7, dadurch gekennzeichnet, dass die Befestigung der Verstärkungsscheibe (26) an der Radschüssel (14) oder Radscheibe durch Schrauben erfolgt, die auf wenigstens zwei Befestigungslochkreisen angeordnet sind.

9. Metallfelge nach einem der Ansprüche 1 bis 8, dadurch gekennzeichnet, dass die Radschüssel (14) oder Radscheibe einen Gewichtslochkreis für die Befestigung von Radgewichten aufweist, der gleichzeitig als Befestigungslochkreis für die Befestigung der Verstärkungsscheibe (26) an der Radschüssel (14) oder Radscheibe genutzt wird.

10. Metallfelge nach einem der Ansprüche 1 bis 9, dadurch gekennzeichnet, dass die Radschüssel (14) oder Radscheibe einen Felgenschraubenlochkreis für die Befestigung der Radschüssel (14) oder Radscheibe an dem Felgenring (12) aufweist, der gleichzeitig als Befestigungslochkreis für die Befestigung der Verstärkungsscheibe (26) an der Radschüssel (14) oder Radscheibe genutzt wird.

11. Metallfelge nach einem der Ansprüche 1 bis 10, dadurch gekennzeichnet, dass die Verstärkungsscheibe (26) eine Kontur aufweist, die der Radschüssel (14) oder Radscheibe im wesentlichen entspricht, so dass sie sich aus einer vorhandenen Radschüssel (14) oder Radscheibe fertigen läßt.
